# EUROPÄISCHE PATENTSCHRIFT

(11) **EP 2 172 431 B1**
(45) Veröffentlichungstag und Bekanntmachung des Hinweises auf die Patenterteilung: **18.07.2012**
(21) Anmeldenummer: 09075406.0
(22) Anmeldetag: 31.08.2009
(51) Int. Cl.: B65G 47/90, C03B 9/447

(54) **Greifereinheit für den Transport von Behälterglas**
Gripper unit for the transport of container glass
Unité de poignée pour le transport de verre de récipient

(30) Priorität: 01.10.2008 DE 102008050492
(43) Veröffentlichungstag der Anmeldung: 07.04.2010
(73) Patentinhaber: Gr2 GmbH, 10829 Berlin (DE)
(72) Erfinder: Raddon, Alexander, 10961 Berlin (DE)
(74) Vertreter: Meissner, Peter E.

(56) Entgegenhaltungen:
- EP-A- 1 717 211
- DE-A1- 2 002 987
- DE-C- 416 099

## Beschreibung

Die Erfindung betrifft eine Greifereinheit für den Transport von Behälterglas, die eine verlangsamte Schließbewegung aufweist.

Eine solche Greifereinheit kommt in Glashütten bei der Herstellung von Behälterglas auf IS-Maschinen zum Einsatz.

Nach dem Formungsprozess werden die Behälter mittels einer Greifereinheit aus der Form gehoben und weitertransportiert.

Es ist bekannt, an der Greifereinheit bewegliche Greiferfinger vorzusehen, welche die Behälter unter oder in der Behältermündung greifen, heben, über eine Abstellplatte positionieren und dort zum weiteren Transport freigeben und abstellen.

Die Greiferfinger können elektromotorisch, pneumatisch oder hydraulisch bewegt werden.

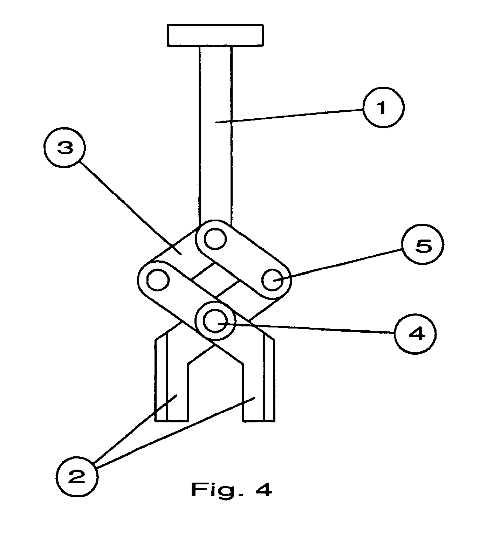

Fig. 4 zeigt eine herkömmliche Konstruktion mit pneumatischem Antrieb der Greifereinheit, wie sie in der Anordnung gemäß der Schrift US 4,379,581 zum Einsatz kommt. Hier besteht die Verbindungsmechanik zwischen der Kolbenstange 1 des Antriebes und den über Kreuz an einem Bolzen 4 drehbar gelagerten Fingerhaltern 2, an denen die Finger (nicht dargestellt) befestigt sind, aus Laschen 3, die mit den Fingerhaltern 2 über das Gelenk 5 drehbar verbunden sind, und die die Kraft des Kolbens auf die Fingerhalter 2 übertragen. Bei dieser Konstruktion vollziehen die Fingerhalter 2 eine Kreisbewegung um die Drehachse des Bolzens 4.

Die Winkelgeschwindigkeit der Fingerhalter 2 und damit der Greiferfinger bleibt bei Betätigung der Greifereinheit annähernd konstant und ist direkt proportional zu der linearen Geschwindigkeit des Kolbens und der Kolbenstange 1 des Antriebes.

Da der Glasbehälter beim Greifen unterhalb oder in der Behältermündung von den Greiferfingem erfasst wird, kann eine zu hohe Fingergeschwindigkeit hierbei zur Beschädigungen der Behältermündung oder des Behälterhalses führen.

Eine Geschwindigkeitsänderung ist bei dieser Konstruktion nur über die Luftzufuhr des pneumatischen Antriebes möglich. Bei Verringerung der Luftzufuhr wird jedoch auch die Geschwindigkeit der Gesamtbewegung reduziert und damit der Produktionsprozess verlangsamt. Zudem erfolgt die Einstellung über einfache Nadelventile, welche durch ihre Ungenauigkeit die Reproduzierbarkeit des Prozesses unmöglich macht.

Die Schrift DE 2 002 987 A1 zeigt eine Vorrichtung zur Handhabung von Werkstücken, bei der ein Steuerkurvenorgan bei seiner Vorwärts- bzw. Rückwärtsbewegung die Art des Öffnens und Schließens eines zangenartigen Greifers steuert.

Der Erfindung lag die Aufgabe zugrunde, eine Greifereinheit für den Transport von Behälterglas zu schaffen, bei der die Greiferfinger den Glasbehälter langsam und damit behutsam ergreifen und bei der die Gesamtbewegung der Greifereinheit dennoch relativ schnell abläuft.

Die Lösung der Aufgabe erfolgt entsprechend den Merkmalen des Anspruchs 1. Die weiteren Ansprüche stellen zweckmäßige Ausgestaltungen der erfindungsgemäßen Lösung dar.

Die erfindungsgemäße Greifereinheit bestehend aus einem Hubkolbenantrieb, bei dem eine Kolbenstange bei ihrer Ausfahrbewegung zwei drehbar angeordnete Fingerhalter derart bewegt, dass sich an den Fingerhaltern angeordnete Finger aus einer Öffnungsstellung aufeinander zu bewegen und das Behälterglas greifen.

Die Fingerhalter sind mit einem Abstand zum Hubzylinder in der Bewegungslinie der Kolbenstange drehbar gelagert. Sie weisen an dem zu den montierten Fingern entgegengesetzten Ende ein flaches gekrümmtes Teil auf, das mit einem in Richtung auf den Hubzylinder nach außen kurvenförmig verlaufenden Langloch versehen ist.

Die Kolbenstange ist an ihrem vorderen Ende mit einer Quertraverse versehen, die an jedem Ende quer zur Traverse einen Bolzen trägt, der durch das Langloch des an dem betreffenden Ende der Quertraverse befindlichen gekrümmten Teils des jeweiligen Fingerhalters hindurchgreift und im Langloch gleiten kann.

Der Kurvenverlauf des Langlochs in dem gekrümmten Teil der Fingerhalter ist so gewählt, dass sich die Enden der Fingerhalter, an denen die Finger befestigt sind, beim Ausfahren der Kolbenstange aus einer Spreizstellung, in der die Bolzen am oberen Ende des Langlochs anliegen, zunächst schnell und sodann immer langsamer aufeinander zu bewegen, so dass der Glasbehälter durch die Finger in behutsamer Weise ergriffen werden kann.

In vorteilhafter Ausgestaltung ist die drehbare Lagerung der Fingerhalter an einem Fortsatz des Hubzylindergehäuses angeordnet.

Die Bolzen an der Quertraverse sind auf der der Quertraverse gegenüberliegenden Seite des gekrümmten Teils des Fingerhalters mit einer durch einen Splint gesicherten Scheibe versehen.

Die Finger können mittels Schrauben oder mittels Steckverbindung und Einrastung an den Fingerhaltern befestigt sein.

In zweckmäßiger Weise stehen die Enden der Fingerhalter, an denen die Finger befestigt sind, in der Spreizstellung, d.h. bei eingefahrener Kolbenstange, in einem Winkel von 30° und bei vollständig ausgefahrener Kolbenstange parallel zueinander. Durch geeignete Positionierung und Ausformung der Kurve in den Langlöchern wird bei annähernd konstanter Kolbengeschwindigkeit eine Reduktion der Winkelgeschwindigkeit der Fingerhalter und der Greiferfinger erreicht.

Die Winkelgeschwindigkeit und damit die Geschwindigkeit der Schließbewegung der Greiferfinger verhält sich nicht linear zur Kolbengeschwindigkeit.

Die Geschwindigkeitsreduktion der Greiferfinger wirkt sich nur wenig auf die Gesamtbewegung aus und kann je nach Position und Ausformung der Kurve in den Länglöchern genau an den kritischen Moment des Umschließens der Mündung des Glasbehälters durch die Greiferfinger angepasst werden.

Eine Einstellung der Greifgeschwindigkeit über die Luftzufuhr ist nicht notwendig und der Vorgang ist durch die festgelegte und gleichbleibende Form und Position der Kurve in den Langlöchern stets reproduzierbar.

Beschädigungen an der Behältermündung oder des Behälterhalses werden durch die reduzierte Geschwindigkeit der Greiferfinger in der Endphase der Greiferfingerbewegung vermieden.

Der Ablauf der Schließbewegung der Fingerhalter ist durch Veränderung des Kurvenverlaufs der Langlöcher variierbar.

Zur Änderung des Kurvenverlaufs ist es möglich, die Fingerhalter austauschbar und die Achse, an der die Fingerhalter drehbar gelagert sind, zum Austausch der Fingerhalter manuell herausziehbar zu gestalten.

Der Antrieb des Hubkolbens kann wahlweise pneumatisch, hydraulisch oder elektrisch erfolgen.

Die Erfindung soll an einem Ausführungsbeispiel anhand der Zeichnungen näher erläutert werden.

In den Zeichnungen zeigen:
- Fig. 1:: Die erfindungsgemäß Greifereinheit in perspektivischer Ansicht;
- Fig. 2:: Die erfindungsgemäße Greifereinheit im geöffneten Zustand;
- Fig. 3:: die erfindungsgemäße Greifereinheit im geschlossenen Zustand;
- Fig. 4:: eine vorbekannte Greifereinheit.

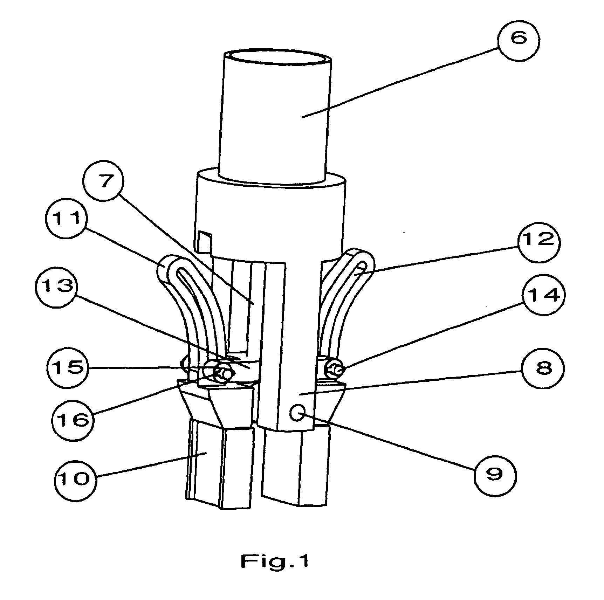

Die Greifereinheit gemäß Fig. 1 besteht aus einem Zylinder 6, in welchem ein pneumatisch betriebener Kolben mit Kolbenstange 7 eine lineare Bewegung ausführt. Am Ende eines das Zylindergehäuse verlängernden Fortsatzes 8 sind mittels einer Achse 9 Fingerhalter 10 drehbar gelagert.

Die Fingerhalter 10 weisen an dem zu den montierten Fingern entgegengesetzten Ende des Fingerhalters ein flaches gekrümmtes Teil 11 auf, das mit einem in Richtung auf den Hubzylinder nach außen kurvenförmig verlaufenden Langloch 12 versehen ist.

Die Kolbenstange 7 ist an ihrem vorderen Ende mit einer Quertraverse 13 versehen. Die Quertraverse 13 trägt an jedem Ende quer zur Traverse einen Bolzen 14, der durch das Langloch 12 des an dem betreffenden Ende der Quertraverse befindlichen gekrümmten Teils 11 des jeweiligen Fingerhalters 10 hindurchgreift und der in dem Langloch 12 gleiten kann.

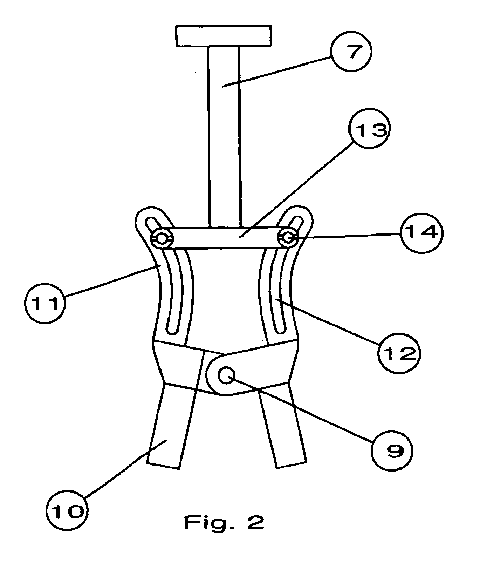

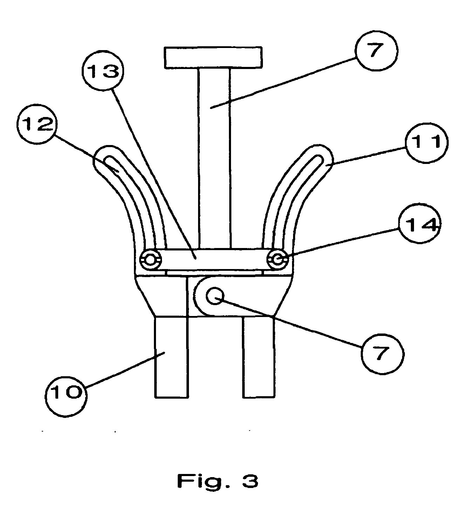

Der Kurvenverlauf des Langlochs 12 in dem gekrümmten Teil 11 der Fingerhalter ist so gewählt, dass sich die Enden der Fingerhalter10, an denen die Finger befestigt sind, beim Ausfahren der Kolbenstange 7 aus einer Spreizstellung im drucklosen Zustand des pneumatischen Hubkolbenantriebes, in der die Bolzen 14 der Quertraverse 13 am oberen Ende des Langlochs 12 anliegen (Fig. 2), zunächst schnell und dann immer langsamer aufeinander zu bewegen, bis sie ihre Endstellung, in der sie den Glasbehälter ergreifen, erreichen (Fig. 3). Durch das in der Endphase des Schließens der Greifereinheit langsame Annähern der Finger ist gewährleistet, dass der Glasbehälter von den Fingern behutsam ergriffen und sodann sicher abtransportiert werden kann.

## Patentansprüche

1. Greifereinheit für den Transport von Behälterglas,
bestehend aus einem Hubkolbenantrieb, bei dem eine Kolbenstange (7) bei ihrer Ausfahrbewegung zwei drehbar angeordnete Fingerhalter (10) derart bewegt, dass sich an den Fingerhaltern angeordnete Finger aus einer Öffnungsstellung zum Greifen des Behälterglases aufeinander zu bewegen,
**dadurch gekennzeichnet,**
**dass** die in einem Abstand zum Hubzylinder in der Bewegungslinie der Kolbenstange (7) drehbar gelagerten Fingerhalter (10) an dem zu den montierten Fingern entgegengesetzten Ende ein flaches gekümmtes Teil (11) aufweisen, das mit einem in Richtung auf den Hubzylinder nach außen kurvenförmig verlaufenden Langloch (12) versehen ist,
**dass** die Kolbenstange (7) an ihrem vorderen Ende mit einer Quertraverse (13) versehen ist, die an jedem Ende quer zur Quertraverse einen Bolzen (14) trägt, der durch das Langloch (12) des an dem betreffenden Ende der Quertraverse (13) befindlichen gekrümmten Teils (11) des jeweiligen Fingerhalters hindurchgreift und im Langloch (12) gleiten kann und
**dass** der Kurvenverlauf des Langlochs (12) in dem gekrümmten Teil (11) der Fingerhalter so gewählt ist, dass sich die Enden der Fingerhalter, an denen die Finger befestigt sind, beim Ausfahren der Kolbenstange (7) aus einer Spreizstellung, in der die Bolzen (14) der Quertraverse (13) am oberen Ende des Langlochs (12) anliegen, zunächst schnell und sodann immer langsamer aufeinander zu bewegen.

2. Greifereinheit nach Anspruch 1,
**dadurch gekennzeichnet,**
**dass** die drehbare Lagerung der Fingerhalter (10) an einem Fortsatz (8) des Hubzylindergehäuses (6) angeordnet ist.

3. Greifereinheit nach einem der Ansprüche 1 oder 2,
**dadurch gekennzeichnet,**
**dass** die Bolzen (14) an der Quertraverse (13) auf der der Quertraverse gegenüberliegenden Seite des gekrümmten Teils (11) des Fingerhalters mit einer durch einen Splint (16) gesicherten Scheibe (15) versehen sind.

4. Greifereinheit nach einem der Ansprüche 1 bis 3,
**dadurch gekennzeichnet,**
**dass** die Finger an den Fingerhaltern (10) mittels Schrauben befestigt sind.

5. Greifereinheit nach einem der Ansprüche 1 bis 4,
**dadurch gekennzeichnet,**
**dass** die Finger an den Fingerhaltern (10) mittels Steckverbindung und Einrastung befestigt sind.

6. Greifereinheit nach einem der Ansprüche 1 bis 5,
**dadurch gekennzeichnet,**
**dass** die Enden der Fingerhalter (10), an denen die Finger befestigt sind, in der Spreizstellung bei eingefahrener Kolbenstange (7) in einem Winkel von 30° zueinander stehen.

7. Greifereinheit nach einem der Ansprüche 1 bis 6,
**dadurch gekennzeichnet,**
**dass** die Enden der Fingerhalter (10), bei vollständig ausgefahrener Kolbenstange (7) und montierten Fingern parallel zueinander stehen.

8. Greifereinheit nach einem der Ansprüche 1 bis 7,
**dadurch gekennzeichnet,**
**dass** der Ablauf der Schließbewegung der Fingerhalter (10) durch Veränderung des Kurvenverlaufs der Langlöcher vanierbar ist.

9. Greifereinheit nach Anspruch 8,
**dadurch gekennzeichnet,**
**dass** zur Änderung des Kurvenverlaufs die Fingerhalter (10) austauschbar sind.

10. Greifereinheit nach Anspruch 9,
**dadurch gekennzeichnet,**
**dass** die Achse (9), an der die Fingerhalter (10) drehbar gelagert sind , zum Austausch der Fingerhalter manuell herausziehbar gestaltet ist.

11. Greifereinheit nach einem der Ansprüche 1 bis 10,
**dadurch gekennzeichnet,**
**dass** der Hubkolbenantrieb pneumatisch erfolgt.

12. Greifereinheit nach einem der Ansprüche 1 bis 10,
**dadurch gekennzeichnet,**
**dass** der Hubkolbenantrieb hydraulisch erfolgt.

13. Greifereinheit nach einem der Ansprüche 1 bis 10,
**dadurch gekennzeichnet,**
**dass** der Hubkolbenantrieb elektrisch erfolgt.

## Claims

1. A gripper unit for the transportation of container glass, consisting of a piston drive with which a piston rod (7) moves, upon its extension motion, two rotatably arranged finger holders (10) in such a manner that fingers arranged on the finger holders move towards one another from an opening position in order to grip the container glass, **characterised in that** the finger holders (10), rotatably mounted at a distance from the lifting cylinder in the motion line of the piston rod (7), have a flat, curved part (11) at the end opposite the mounted fingers, which part (11) is provided with an elongated hole (12) running in an outwards curved manner in the direction of the lifting cylinder, **in that** the piston rod (7) is provided with a transverse cross-piece (13) at its front end, which transverse crosspiece (13) bears a bolt (14) at each end so as to be transverse to the transverse crosspiece, which bolt (14) engages through the elongated hole (12) of the curved part (11), located at the respective end of the transverse crosspiece (13), of the respective finger holder and can slide in the elongated hole (12) and **in that** the curve course of the elongated hole (12) in the curved part (11) of the finger holders is selected in such a manner that the finger-holder ends to which the fingers are secured move, upon extension of the piston rod (7), at first rapidly and then more and more slowly towards one another from a spreading position in which the bolts (14) of the transverse crosspiece (13) contact the upper end of the elongated hole (12).

2. A gripper unit according to claim 1, **characterised in that** the rotatable mounting of the finger holders (10) is arranged on a extension (8) of the lifting cylinder housing (6).

3. A gripper unit according to one of claims 1 and 2, **characterised in that** on the side, opposite the transverse crosspiece, of the curved part (11) of the finger holder, the bolts (14) at the transverse crosspiece (13) are provided with a disc (15) secured by a cotter pin (16).

4. A gripper unit according to any one of claims 1 to 3, **characterised in that** the fingers are secured to the finger holders (10) by means of screws.

5. A gripper unit according to any one of claims 1 to 4, **characterised in that** the fingers are secured to the finger holders (10) by means of a plug-in connection and engagement.

6. A gripper unit according to any one of claims 1 to 5, **characterised in that** the ends of the finger holders (10), to which the fingers are secured, are at an angle of 30° to one another in the spreading position when the piston rod (7) is retracted.

7. A gripper unit according to any one of claims 1 to 6, **characterised in that** the ends of the finger holders (10) are parallel to one another when the piston rod (7) is completely extended and the fingers are mounted.

8. A gripper unit according to any one of claims 1 to 7, **characterised in that** the progression of the closing motion of the finger holders (10) is variable through alteration of the curve course of the elongated holes.

9. A gripper unit according to claim 8, **characterised in that** the finger holders (10) are exchangeable in order to alter the curve course.

10. A gripper unit according to claim 9, **characterised in that** the arbor (9) on which the finger holders (10) are rotatably mounted is fashioned to be able to removed by hand for exchange of the finger holders.

11. A gripper unit according to any one of claims 1 to 10, **characterised in that** the piston drive takes place pneumatically.

12. A gripper unit according to any one of claims 1 to 10, **characterised in that** the piston drive takes place hydraulically.

13. A gripper unit according to any one of claims 1 to 10, **characterised in that** the piston drive takes place electrically.

## Revendications

1. Unité de préhension destinée au transport de verre pour récipient,
constituée d'un entraînement à piston élévateur, dans lequel une tige de piston (7) déplace, lors de son mouvement de déploiement, deux appuis de doigts (10) agencés à rotation de manière à déplacer les doigts placés sur les appuis de doigts l'un sur l'autre depuis une position d'ouverture pour saisir le verre pour récipient,
**caractérisée en ce que**
les appuis de doigts (10) montés à rotation à distance du cylindre de levage dans la ligne de déplacement de la tige de piston (7) présentent, à l'extrémité opposée aux doigts montés, une partie (11) plate arquée qui est pourvue d'un trou allongé (12) s'étendant en arc vers l'extérieur en direction du cylindre de levage,
la tige de piston (7) est pourvue, à son extrémité avant, d'une traverse (13) qui porte, à chaque extrémité, transversalement à la traverse, un boulon (14), qui passe à travers le trou allongé (12) de la partie arquée (11) de l'appui de doigts respectif se trouvant à l'extrémité concernée de la traverse (13) et peut glisser dans le trou allongé (12) et
le tracé arqué du trou allongé (12) dans la partie arquée (11) des appuis de doigts est choisi de manière que les extrémités des appuis de doigts, sur lesquelles sont fixés les doigts, se déplacent l'une sur l'autre lors du déploiement de la tige de piston (7) depuis une position d'écartement, dans laquelle les boulons (14) de la traverse (13) sont appliqués à l'extrémité supérieure du trou allongé (12), d'abord rapidement, puis de plus en plus lentement.

2. Unité de préhension selon la revendication 1,
**caractérisée en ce que**
le palier rotatif des appuis de doigts (10) est agencé sur un prolongement (8) du boîtier (5) du cylindre de levage.

3. Unité de préhension selon l'une quelconque des revendications 1 ou 2,
**caractérisée en ce que**
les boulons (14), sur la traverse (13), sont pourvus, sur le côté de la partie arquée (11) de l'appui de doigts opposé à la traverse, d'une rondelle (15) protégée par une goupille de retenue (16).

4. Unité de préhension selon l'une quelconque des revendications 1 à 3,
**caractérisée en ce que**
les doigts sont fixés sur les appuis de doigts (10) au moyen de vis.

5. Unité de préhension selon l'une quelconque des revendications 1 à 4,
**caractérisée en ce que**
les doigts sur les appuis de doigts (10) sont fixés par enfichage et verrouillage.

6. Unité de préhension selon l'une quelconque des revendications 1 à 5,
**caractérisée en ce que**
les extrémités des appuis de doigts (10), auxquelles sont fixés les doigts, font un angle de 30 ° l'une par rapport à l'autre en position d'écartement lorsque la tige de piston (7) est rentrée.

7. Unité de préhension selon l'une quelconque des revendications 1 à 6,
**caractérisée en ce que**
les extrémités des appuis de doigts (10) sont parallèles l'une à l'autre lorsque la tige de piston (7) est complètement déployée et que les doigts sont montés.

8. Unité de préhension selon l'une quelconque des revendications 1 à 7,
**caractérisée en ce que**
le déroulement du mouvement de fermeture des appuis de doigts (10) peut varier en modifiant le tracé arqué des trous allongés.

9. Unité de préhension selon la revendication 8,
**caractérisée en ce que**,
pour modifier le tracé arqué, les appuis de doigts (10) peuvent être échangés.

10. Unité de préhension selon la revendication 9,
**caractérisée en ce que**
l'axe (9), sur lequel sont montés à rotation les appuis de doigts (10), peut être extrait manuellement pour échanger les appuis de doigts.

11. Unité de préhension selon l'une quelconque des revendications 1 à 10,
**caractérisée en ce que**
l'entraînement à piston élévateur se fait par voie pneumatique.

12. Unité de préhension selon l'une quelconque des revendications 1 à 10,
**caractérisée en ce que**
l'entraînement à piston élévateur se fait par voie hydraulique.

13. Unité de préhension selon l'une quelconque des revendications 1 à 10,
**caractérisée en ce que**
l'entraînement à piston élévateur se fait par voie électrique.
